# EUROPEAN PATENT SPECIFICATION

(11) **EP 2 095 728 B1**
(45) Date of publication and mention of the grant of the patent: **07.09.2011**
(21) Application number: 09000940.8
(22) Date of filing: 23.01.2009
(51) Int. Cl.: A23L 2/52, A23L 1/29, A23L 1/305

(54) **Amino acid concentrate in aqueous gel and fatigue-relieving drink obtainable by diluting said concentrate in water**
Aminosäurenkonzentrat in wässrigem Gel und mittels Verdünnung besagten Konzentrats mit Wasser erhaltenes Getränk zur Bekämpfung von Müdigkeit
Concentré d'acides aminés dans un gel aqueux et boisson supprimant la fatigue pouvant être obtenue en diluant ledit concentré dans de l'eau

(30) Priority: 25.01.2008 IT MI20080113; 27.06.2008 IT MI20081180
(43) Date of publication of application: 02.09.2009
(73) Proprietor: Cesar Gallia s.r.l., 27029 Vigevano (PV) (IT)
(72) Inventor: Ceresa, Gian Battista, 23030 Livigno (SO) (IT)
(74) Representative: Minoja, Fabrizio

(56) References cited:
- EP-A- 1 541 042
- EP-A- 1 629 840
- US-A1- 2006 275 387
- DATABASE WPI Week 199718 Thomson Scientific, London, GB; AN 1997-197203 XP002539942 & JP 09 052828 A (SASAKI KAGAKU KOGYO KK) 25 February 1997 (1997-02-25)
- DATABASE WPI Week 199632 Thomson Scientific, London, GB; AN 1996-316268 XP002539945 & JP 08 140628 A (MEIJI MILK PROD CO LTD) 4 June 1996 (1996-06-04)

## Description

The present invention relates to a fatigue-relieving composition, in particular a drink comprising a solution of amino acids, and possibly other ingredients, in hydrolysed, gelled water.

In particular, the drink of the invention is obtained by diluting in carbonated mineral water a concentrate comprising a solution of leucine, isoleucine and valine, lysine, threonine, histidine, glutamine and tryptophan in electrolysed, gelled water, provided that:
- leucine, isoleucine and valine are present in the weight ratio of 2:1:1 respectively;
- the total amount of the three branched-chain amino acids leucine, isoleucine and valine is twice the total amount of the other five amino acids.

Lysine can be present in the form of monohydrochloride.

Similar amino-acid compositions are disclosed in EP 1 629 840 which does not mention the use of electrolysed gelled water.

A preferred percentage composition of the concentrate according to the invention is set out below:

| | |
|---|---|
| Leucine | 1.875% |
| Isoleucine | 0.9375% |
| Valine | 0.9375% |
| Lysine monohydrochloride | 0.3125% |
| Threonine | 0.565% |
| Histidine | 0.277% |
| Glutamine | 0.3375% |
| Tryptophan | 0.383%. |

Tryptophan can be present in even higher percentages, provided that the conditions indicated above are complied with.

The percentages indicated can vary by up to plus or minus 30% without any substantial variation in the properties of the drink.

The concentrate may contain flavourings, preservatives and antioxidants without any other ingredients, or may also contain other components such as mineral salts, vitamins, maltodextrins, sugars, carnosine, carnitine, plant extracts, colostrum or powdered milk.

The hydrolysed water used to prepare the concentrate according to the invention is obtained by hydrolysis in an electrolyser with a semipermeable membrane which separates the anode and cathode; the acidic water in the anode compartment and the alkaline water in the cathode compartment are combined at the end of the electrolysis process until the desired pH value is reached, depending on the application. A substantially neutral pH is preferred, in particular between 6.5 and 7.5, and preferably pH 7.0. The electrolysis unit can be the conventional type with platinum-covered titanium mesh electrodes of suitable dimensions in relation to the volume of the electrolysis chamber. The membrane is available on the market, for example from Dupont, under the tradename Nafion®.

The water to be hydrolysed can be distilled water, to which a sodium, potassium or lithium salt can be added, typically sodium, potassium or lithium chloride or sulphate, in amounts ranging between 0.1 and 6 g/l, preferably 0.8 g/l, or a natural spring water, water with a low mineral content or mineral water. Water with a low mineral content is preferred.

Any chlorine developed as a result of hydrolysis is removed by stirring, stripping, chemical reaction or filtration through activated carbon.

At least one gelling agent is then added to the water thus treated, such as carrageenans obtained from *Chondrus crispus* and *Gigartina mamitiosa* seaweed, agar agar, xanthan gum from *Xanthomonas campestris*, guar, pectins, gelatins, alginates, starches, cellulose or derivatives thereof, or other natural or synthetic polymers or polysaccharides which are conventionally used to increase the density of aqueous solutions. The preferred gelling agents are xanthan gum or carrageenans, which are available on the market from several manufacturers. The amount of gelling agent can vary within a wide range, depending on the desired consistency of the gel and the type of gelling agent chosen; however, it will be approximately between 0.01 and 1% by weight, preferably between 0.05 and 0.2%.

The amino acids are then added to the water after said electrolysis and gelling treatments.

Electrolysis treatment apparently induces an alteration in the natural arrangement of the water molecules as well as ion formation. The gelling agent appears to stabilise these configurations, which are believed to be responsible for the advantageous, unexpected properties of the formulations according to the invention. The existence of these different forms has formed the subject of various studies, and can be demonstrated by nuclear magnetic resonance spectroscopy and chemical identification. In any event, the validity of the invention is in no way dependent on the correctness of this theory.

The concentrate will be diluted at the time of use in the proportion of 10 to 20%, typically 16 parts of concentrate to 84 parts of spring water, mineral water or water with a low mineral content, which may be still, or preferably carbonated. This process produces an isotonic drink that relieves fatigue and muscle pain, especially during and after a sporting performance of particular difficulty or duration, producing a pleasant sensation of physical refreshment.

The drink according to the invention is also useful for those who suffer from muscle cramp, whether essential or related with heart, liver or kidney disorders; the onset of cramp can be prevented by taking the drink in advance, and cramps can be rapidly eliminated if they occur.

The beneficial effects attributable to the composition of the invention have been tested on a large number of sportsmen and women in different sports (mountain biking, cycling, cyclocross, cross-country skiing, marathon running, swimming, fell running, skyrunning, trail and ultratrail running, skating, football, fencing and tennis). These effects comprise improved performance, improved quality of sleep after physical performance, a reduction in sweating, sensation of hunger and dense salivation, and a reduction of 80% or more in the intensity of standard muscle pain and the delayed muscle pain that typically arises 24-48 hours after performances involving excessive muscle use without sufficient preparation. The drink does not have any appreciable effects on diuresis, is not an energy or salt supplement, has a pleasant flavour, is easily digested and can be taken in very large amounts: up to 6-8 litres a day in the event of high risk of dehydration or high fluid loss during lengthy performances in hot environments such as desert races, cycling races and the like.

Normally, it is sufficient to take at least 250 ml before the start of the sporting performance, followed by 250 ml an hour during the performance and 250-500 ml at the end of the performance to prevent or reduce muscle cramp, lactic acid accumulation and the onset of muscle hardening and contractions during and after the sporting performance.

The invention will be illustrated in greater detail in the Example below.

### Example - Preparation of a concentrate for a fatigue-relieving drink

1. The alkaline water and acidic water are collected at the cathode and anode respectively after electrolysis, conducted on water enriched with salts, as indicated above.
2. The acidic water is dechlorinated by mechanical stirring or filtration through activated carbon to remove any chlorine produced.
3. The acidic water and alkaline water obtained from the electrolysis process are mixed until a pH 7 value is obtained.
4. The following preservatives and components are added (in the order listed):

| | |
|---|---|
| Liquid red orange flavouring | 0.1% |
| Acesulfame k | 0.09% |
| Crystalline anhydrous citric acid | 0.72% |
| Getralacta I® (gelling agent) | 0.2% |
| Sodium chloride | 0.725% |
| Sodium benzoate | 0.125% |
| Potassium sorbate | 0.163% |
| Leucine | 1.875% |
| Isoleucine | 0.9375% |
| Valine | 0.9375% |
| Lysine monohydrochloride | 0.3125% |
| Threonine | 0.565% |
| Histidine | 0.277% |
| Glutamine | 0.3375% |
| Tryptophan | 0.383%. |

To prepare the drink, the concentrate is dissolved in the proportion of 10% to 20% in still or carbonated mineral water, water with a low mineral content or natural water.

## Claims

1. A concentrate for the preparation of a fatigue-relieving drink, comprising a solution of leucine, isoleucine and valine, lysine, threonine, histidine, glutamine and tryptophan in electrolysed gelled water, provided that:
- leucine, isoleucine and valine are present in the weight ratio of 2:1:1 respectively;
- the total amount of the three branched-chain amino acids leucine, isoleucine and valine is twice the total amount of the other five amino acids

2. A concentrate as claimed in claim 1, wherein the electrolysed water is gelled by means of carrageenans obtained from *Chondrus crispus* and *Gigartina mamitiosa* seaweed, agar agar, xanthan gum from *Xanthomonas campestris*, guar, pectins, gelatins, alginates, starches, cellulose or derivatives thereof.

3. A concentrate as claimed in claim 2, wherein the gelling agent is selected from xanthan gum or carrageenans, in an amount between 0.01 and 1% by weight, and preferably between 0.05 and 0.2%.

4. A concentrate as claimed in any one of claims 1 to 3, wherein the water subjected to hydrolysis is a water with a low mineral content.

5. A concentrate as claimed in any one of claims 1 to 4, having the following percent amino acid composition:
| | |
|---|---|
| Leucine | 1.875% |
| Isoleucine | 0.9375% |
| Valine | 0.9375% |
| Lysine monohydrochloride | 0.3125% |
| Threonine | 0.565% |
| Histidine | 0.277% |
| Glutamine | 0.3375% |
| Tryptophan | 0.383%. |

6. A concentrate as claimed in any one of claims 1 to 5, further comprising flavourings, preservatives and antioxidants.

7. A concentrate as claimed in any one of claims 1 to 6, comprising no other ingredients.

8. A concentrate as claimed in any one of claims 1 to 6, further comprising mineral salts, vitamins, maltodextrins, sugars, carnosine, carnitine, plant extracts, colostrum or powdered milk.

9. A fatigue-relieving drink obtainable by diluting the concentrate claimed in claims 1-8 in natural or carbonated spring water, mineral water or water with a low mineral content, in percentages between 10 and 20% by weight.

10. A solution of leucine, isoleucine and valine, lysine, threonine, histidine, glutamine and tryptophan in hydrolysed gelled water, provided that:
- leucine, isoleucine and valine are present in the weight ratio of 2:1:1 respectively;
- the total amount of the three branched-chain amino acids leucine, isoleucine and valine is twice the total amount of the other five amino acids,
for use as a fatigue-relieving drink, especially to reduce muscle fatigue caused by prolonged physical effort.

## Patentansprüche

1. Konzentrat zur Herstellung eines Getränkes zur Bekämpfung von Müdigkeit, umfassend eine Lösung von Leucin, Isoleucin und Valin, Lysin, Threonin, Histidin, Glutamin und Tryptophan in elektrolysiertem, geliertem Wasser, unter der Voraussetzung, dass:
- Leucin, Isoleucin und Valin jeweils in einem Gewichtsverhältnis von 2:1 :1 vorhanden sind,
- die Gesamtmenge der drei Aminosäuren mit verzweigter Kette Leucin, Isoleucin und Valin zweimal so hoch ist wie die Gesamtmenge der anderen fünf Aminosäuren.

2. Konzentrat gemäß Anspruch 1 , wobei das elektrolysierte Wasser mittels Carrageenen, die aus den Algen *Chondrus crispus* und *Gigartina mamitiosa* erhalten werden, Agar Agar, Xanthan aus *Xanthomonas campestris*, Guar, Pektinen, Gelatinen, Alginaten, Stärken, Zellulose oder Derivaten davon geliert wird.

3. Konzentrat gemäß Anspruch 2, wobei das Gelierungsmittel ausgewählt wird aus Xanthan oder Carrageenen in einer Menge von 0,01 und 1 Gewichts-% und bevorzugt von 0,05 bis 0,2 %.

4. Konzentrat gemäß einem der Ansprüche 1 bis 3, wobei das Wasser, welches einer Hydrolyse unterworfen wird, Wasser mit einem niedrigen Mineralgehalt ist.

5. Konzentrat gemäß einem der Ansprüche 1 bis 4, das die folgende prozentuale Aminosäurenzusammensetzung besitzt:
| | |
|---|---|
| Leucin | 1,875% |
| Isoleucin | 0,9375% |
| Valin | 0,9375% |
| Lysinmonohydrochlorid | 0,3125% |
| Threonin | 0,565% |
| Histidin | 0,277% |
| Glutamin | 0,3375% |
| Trypotophan | 0,383%. |

6. Konzentrat gemäß einem der Ansprüche 1 bis 5, welches zusätzlich Aromastoffe, Konservierungsmittel und Antioxidantien umfasst.

7. Konzentrat gemäß einem der Ansprüche 1 bis 6, welches keine weiteren Inhaltsstoffe umfasst.

8. Konzentrat gemäß einem der Ansprüche 1 bis 6, welches zusätzlich Mineralsalze, Vitamine, Maltodextrine, Zucker, Carnosin, Carnitin, Pflanzenextrakte, Colostrum oder Milchpulver umfasst.

9. Getränk zur Bekämpfung von Müdigkeit, das durch die Verdünnung des Konzentrates gemäß den Ansprüchen 1-8 zu 10 bis 20 Gewichts-% in natürlichem oder kohlesäurehaltigem Quellwasser, Mineralwasser oder Wasser mit niedrigem Mineralgehalt erhältlich ist.

10. Lösung von Leucin, Isoleucin und Valin, Lysin, Threonin, Histidin, Glutamin und Tryptophan in hydrolysiertem, geliertem Wasser, unter der Voraussetzung, dass:
- Leucin, Isoleucin und Valin jeweils in einem Gewichtsverhältnis von 2:1:1 vorhanden sind;
- die Gesamtmenge der drei Aminosäuren mit verzweigter Kette Leucin, Isoleucin und Valin zweimal so hoch ist wie die Gesamtmenge der anderen fünf Aminosäuren,
zur Verwendung als Getränk zur Bekämpfung von Müdigkeit, besonders um Muskelerschöpfung, die durch langanhaltende physische Anstrengung verursacht wird, zu reduzieren.

## Revendications

1. Concentré pour la préparation d'une boisson soulageant la fatigue, comprenant une solution de leucine, isoleucine et valine, lysine, thréonine, histidine, glutamine et tryptophane dans une eau électrolysée gélifiée, à condition que :
- la leucine, l'isoleucine et la valine soient présentes dans le rapport en poids de respectivement, 2:1:1 ;
- la quantité totale des trois acides aminés à chaîne ramifiée leucine, isoleucine et valine soit deux fois la quantité totale des cinq autres acides aminés.

2. Concentré tel que revendiqué selon la revendication 1, dans lequel l'eau électrolysée est gélifiée au moyen de carraghénanes obtenus à partir des algues *Chondrus crispus* et *Gigartina mamitiosa,* d'agar agar, de gomme xanthane provenant de *Xanthomonas campestris,* de guar, de pectines, de gélatines, d'alginates, d'amidons, de cellulose ou de dérivés de ceux-ci.

3. Concentré tel que revendiqué selon la revendication 2, dans lequel l'agent gélifiant est choisi parmi la gomme xanthane ou les carraghénanes, dans une quantité comprise entre 0,01 et 1% en poids, et de préférence entre 0,05 et 0,2%.

4. Concentré tel que revendiqué selon l'une quelconque des revendications 1 à 3, dans lequel l'eau soumise à une hydrolyse est une eau avec une faible teneur en minéraux.

5. Concentré tel que revendiqué selon l'une quelconque des revendications 1 à 4, ayant la composition d'acides aminés en pourcentage suivante :
| | |
|---|---|
| Leucine | 1,875% |
| Isoleucine | 0,9375% |
| Valine | 0,9375% |
| Monochlorydrate de lysine | 0,3125% |
| Thréonine | 0,565% |
| Histidine | 0,277% |
| Glutamine | 0,3375% |
| Tryptophane | 0,383%. |

6. Concentré tel que revendiqué selon l'une quelconque des revendications 1 à 5, comprenant en outre des arômes, des conservateurs et des antioxydants.

7. Concentré tel que revendiqué selon l'une quelconque des revendications 1 à 6, ne comprenant pas d'autre ingrédient.

8. Concentré tel que revendiqué selon l'une quelconque des revendications 1 à 6, comprenant en outre des sels minéraux, des vitamines, des maltodextrines, des sucres, de la carnosine, de la carnitine, des extraits végétaux, du colostrum ou du lait en poudre.

9. Boisson soulageant la fatigue pouvant être obtenue par dilution du concentré revendiqué dans les revendications 1 à 8 dans une eau de source naturelle ou gazéifiée, une eau minérale ou une eau avec une faible teneur en minéraux, à des pourcentages entre 10 et 20% en poids.

10. Solution de leucine, isoleucine et valine, lysine, thréonine, histidine, glutamine et tryptophane dans une eau hydrolysée gélifiée, à condition que :
- la leucine, l'isoleucine et la valine soient présentes dans le rapport en poids de respectivement, 2:1:1 ;
- la quantité totale des trois acides aminés à chaîne ramifiée leucine, isoleucine et valine soit deux fois la quantité totale des cinq autres acides aminés,
pour une utilisation comme boisson soulageant la fatigue, en particulier pour réduire la fatigue musculaire provoquée par un effort physique prolongé.
